Europäisches Patentamt

(19) European Patent Office ·

Office européen des brevets

(11) Publication number: **0 130 718**
**B1**

(12) **EUROPEAN PATENT SPECIFICATION**

(45) Date of publication of patent specification: **20.04.88**

(21) Application number: **84304012.2**

(22) Date of filing: **14.06.84**

(51) Int. Cl.⁴: **B 31 F 1/28**

(54) **Apparatus for producing corrugated cardboard.**

(30) Priority: **05.07.83 JP 122783/83**

(43) Date of publication of application:
**09.01.85 Bulletin 85/02**

(45) Publication of the grant of the patent:
**20.04.88 Bulletin 88/16**

(84) Designated Contracting States:
**BE CH DE FR IT LI NL SE**

(56) References cited:
**JP-A-57 025 940**
**US-A-2 208 126**
**US-A-2 686 555**
**US-A-3 226 840**
**US-A-3 394 041**
**US-A-3 922 129**

(73) Proprietor: **AIKI KOGYO KABUSHIKI KAISHA**
**2-13, Toneri 2-chome**
**Adachi-ku Tokyo (JP)**

(72) Inventor: **Akiyama, Toshimitsu**
**1780-6 Iriya-cho**
**Adachi-ku Tokyo (JP)**

(74) Representative: **Jackson, Peter Arthur et al**
**GILL JENNINGS & EVERY 53-64 Chancery Lane**
**London WC2A 1HN (GB)**

## Description

As is well known, corrugated cardboard i.e. cardboard with a corrugated core, is produced by forming a half-lined (i.e. single-faced) corrugated paper by bonding a corrugated paper and a liner to one another, and then bonding another liner to the half-lined corrugated paper. In some cases, two or more sheets of half-lined corrugated papers are laminated to constitute a "double-backer" or thicker cardboards.

A synthetic resin adhesive such as an emulsion of polyvinyl acetate can be used most suitably as the adhesive for the bonding. However, to cope with the demand for lower production cost, efforts have been made to use less-expensive adhesives. As an example of such efforts, it has been attempted to use raw starch dispersion, i.e. starch particles dispersed and suspended in water. This dispersion is applied to the corrugated paper and, after laying the liner on the corrugated paper, heat and pressure are applied to cause gelation of the starch dispersion into a starch paste adhesive.

The heating under pressure is usually conducted by moving the liner in sliding contact with an array of heat plates, i.e. metallic plates which serve as a heating medium. The heat plates, however, require a considerably large installation area and consume an impractically large amount of energy. In addition, the heat plates often cause undesirable scratches and warp in the corrugated cardboard product.

To obviate this problem, it has been proposed to heat and gelate the raw starch dispersion applied to the half-lined corrugated paper, in advance to the superposition of the paper and the liner.

JP—A—57/25490 discloses an apparatus for producing corrugated cardboard, the apparaus comprising means for continuously supplying at least one half-lined corrugated paper and a liner, means for applying a suspension of raw starch in water to the crests of the corrugated paper, means for blowing steam against the applied raw starch thereby to cause partial gelation of the raw starch, means for forming the corrugated cardboard by pressing the at least one half-lined corrugated paper and the liner to bond them together, and means for continuously taking up the thus formed corrugated cardboard; wherein the means for blowing steam includes a plurality of hollow bodies extending across the moving direction of the half-lined corrugated paper, in use, adjacent to the half-lined corrugated paper, each hollow body having multiple nozzles in its surface which faces, in use, the applied raw starch, the interior of each hollow body being divided by ducting for high pressure steam, into a first manifold and a second manifold which communicate with one another through steam passages, the second manifold accommodating a pipe for supplying low pressure steam into the second manifold, the means for blowing steam further including an air blowing means; and wherein the means for forming the corrugated cardboard includes a heating plate arranged, in use, to contact and heat the liner during pressing the at least one half-lined corrugated paper and the liner.

It has now been found that the efficiency of an apparatus of this kind can be improved if, in accordance with the invention, the air blowing means is disposed at the upstream end of the steam blowing means as viewed in the moving direction of the half-lined corrugated paper and has a slit which blows air, in use, towards the applied raw starch in a direction inclined towards the moving direction.

The new apparatus offers an increase in the production efficiency by realizing a higher speed of production without any degradation of the corrugated cardboard product. If the increase in the production speed is not a matter of concern, the apparatus can effect the production with reduced energy consumption.

The apparatus makes use of steam of low pressure as the heat source. An important feature, however, is that this low pressure steam is reheated to become dry steam which is blown through the nozzles against the raw starch dispersion. The steam pressure preferably ranges between 0.1 and 0.3 $Kg/cm^2G$, usually around 0.2 $Kg/cm^2G$. Because of the reheating, it is possible to obtain easily a high steam temperature of 125 to 130°C at the nozzle outlets. By the use of dry steam of this high temperature, it is possible to avoid too strong an impingement of the steam and also excessive moistening of the corrugated cardboard.

The means for reheating the steam is the steam of a high pressure, preferably at 10 to 12 $Kg/cm^2G$, in the ducting.

The heat possessed by this steam is utilized through heat exchange, namely, the low pressure steam is heated indirectly by the high pressure steam. The high pressure steam may then have its pressure reduced and be used as the low pressure steam.

An example of an apparatus constructed in accordance with the invention is illustrated in the accompanying drawings, in which:—

Figure 1 is a diagrammatic side elevation;

Figure 2A is a vertical cross-sectional view of the steam blowing means;

Figure 2B is a partly cut-away plan of the steam blowing means as shown in Figure 2A;

Figure 2C is a partly cut-away side elevation of the steam blowing means;

Figure 3 is a sectional diagram illustrating the concept of the steam reheating and blowing means;

Figure 4A is a diagrammatic vertical section showing a hood covering the area where the steam is blown;

Figure 4B is a vertical cross section corresponding to Figure 4A;

Figure 5A is a side elevation of an optional modification of part of the apparatus; and,

Figure 5B is an enlarged sectional view of the part shown in Figure 5A.

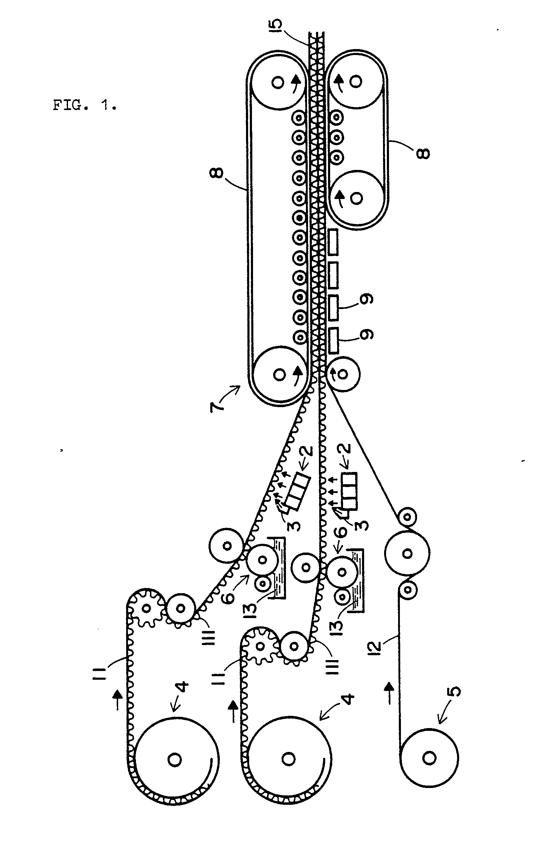

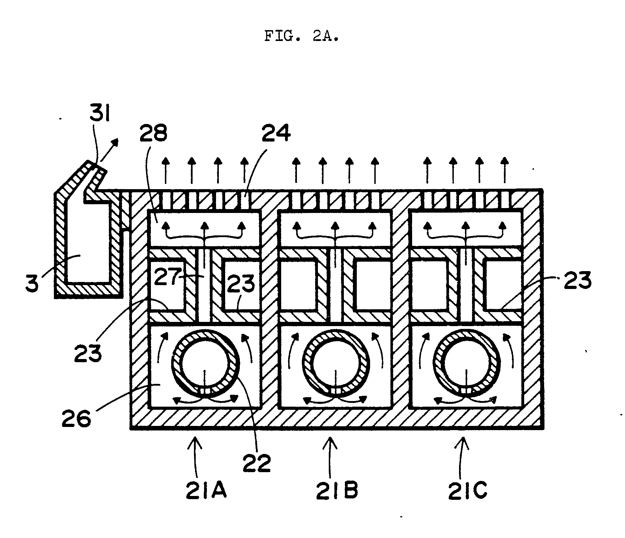

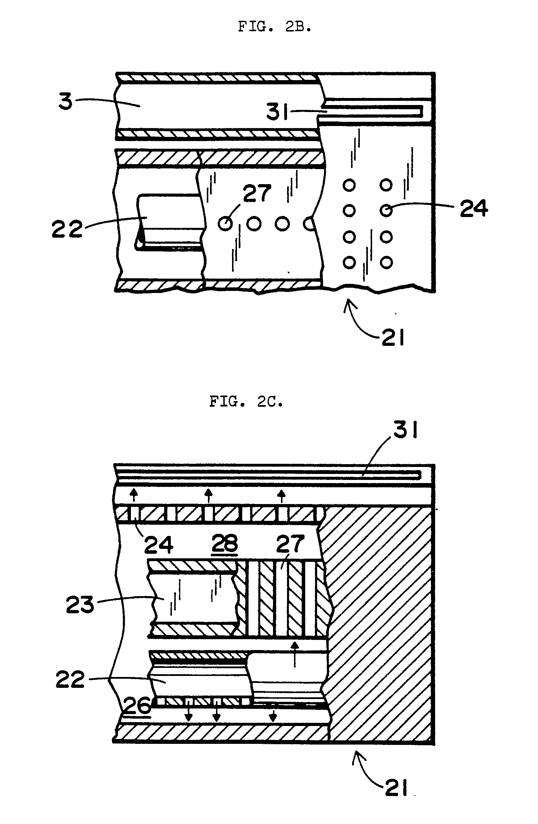

As illustrated, an apparatus 1 for producing a corrugated cardboard essentially comprises, as shown in Figure 1, means 4 for continuously supplying at least one half-lined corrugated paper 11 (two sheets of the paper in the illustrated embodiment), means 5 for continuously supplying a liner 12, means 6 for applying an aqueous dispersion of raw starch 13 to crests 111 of the corrugations of the corrugated core of the half-lined corrugated paper, means 2 for blowing steam against the applied raw starch dispersion thereby to cause partial gelation of the raw starch dispersion into paste, means 7 for forming the corrugated cardboard by pressing the at least one half-lined corrugated paper 11 and the liner 12 to bond and unite them together, and means 8 for continuously taking up the thus formed corrugated cardboard. As shown in Figure 2, the means 2 for blowing steam is housed by a plurality of cases 21A, 21B, 21C in the form of hollow bodies disposed near and below the half-lined corrugated paper and extending across the moving direction of the half-lined corrugated paper. Each hollow body has multiple nozzles 24, 24 ... in its upper surface. The space in each hollow body is divided by integral central pipes 23, 23 constituting ducts for high pressure steam into a first upper manifold 28 and a second lower manifold 26 which communicate with one another through steam passages 27 formed between the adjacent pipes 23, 23.

The lower manifold 26 accommodates a pipes 22 for supplying low pressure steam. An air blowing means 3 is disposed on the upstream side of the upstream hollow body as viewed in the moving direction of the half-lined corrugated paper and has slit 31 which blows air in a direction inclined towards the moving direction of the half-lined corrugated paper 11. The means 7 for forming the corrugated cardboard includes means for contacting and heating the liner 12, e.g., heat plates 9, 9, 9 ... in the illustrated construction, during pressing of the at least one half-lined corrugated paper 11 and the liner 12.

The low pressure steam, supplied through the pipe 22 at a rate regulated by a regulating valve, flows into the lower manifold 26 through nozzles 221 and then flows through the passages 27 while being heated by the high pressure steam flowing through the pipes 23, 23 at both sides of each passage 27 up to the desired temperature. The heated low pressure steam is then blown through the nozzles 24 from the upper manifold 28.

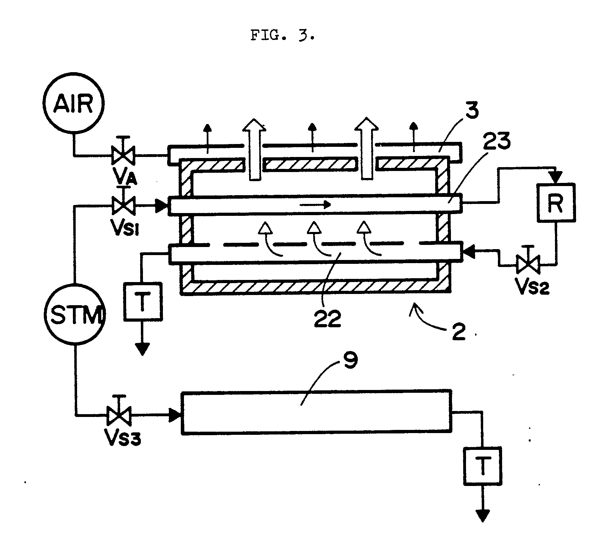

An arrangement as shown in Figure 3 is preferably used when it is desired to utilize the heat possessed by the high pressure steam in advance of the reduction of the pressure of this steam to low presure. Thus, the high pressure steam from a high pressure steam source STM is introduced into the pipes 23 through a valve $Vs_1$ and, after the heat exchange, delivered to a pressure reducing valve R in which the pressure is reduced to a low level. The low pressure steam is then introduced through a valve $Vs_2$ and jetted from the nozzles in the pipe 22. A symbol T represents a steam trap.

The air blowing means disposed at the upstream side of the steam blowing means receives air which is supplied from a compressed air source AIR after a pressure regulation by a valve $V_A$, and blows air through the slit 31 to form a stream of air which is inclined in the direction of flow of the half-lined corrugated paper 11. This air plays two roles, one of which is to dilute the steam blown through the nozzles 24 significantly to lower the temperature thereof so as to create such a condition that the steam impinges gently near the slit and then, at further points, progressively strongly. If the steam at a high temperature impinges strongly and at a large rate on the raw starch dispersion applied to the crests of the corrugations of the half-lined corrugated paper, the gelation takes place rapidly only in the surface region of the starch dispersion to produce a surface solidification of the same, and failing to accomplish the desired uniform half-gelation of the whole of the starch dispersion. Clearly, such surface solidification of the starch dispersion is not desirable for the adhesion of the corrugated paper and the liner to one and other.

Another role of the air blown through the slit 31 is to prevent undesirable half-gelation of the raw starch dispersion in the applying means which may otherwise occur due to heating of the dispersion and the applying means by a flow component of the steam directed towards the upstream side along the half-lined corrugated paper.

The width of the slit 31 and angle of inclination of the air stream, as well as the flow rate and velocity of the air, will be suitably and experimentally determined in accordance with conditions peculiar to each case.

Two or, preferably, three or more steam blowing means are arranged in a side-by-side fashion, and a part or whole of the same is used selectively. A demand for a high rate of production requires correspondingly large heat input to the raw starch dispersion and, hence, a greater number of the steam blowing means to be put into operation. Usually, the operation is started up with only one steam blowing means, i.e., the steam blowing means disposed at the upstream end, and the number of steam blowing means taking part in the operation is gradually increased.

The steam STM of high pressure is supplied to the heat plate 9 after a pressure adjustment by means of a valve $Vs_3$.

In the conventional corrugated cardboard production apparatus in which the gelation of the raw starch dispersion is effected solely by the heat plates, the heat plates are supplied with steam of a considerably high pressure, e.g., 10 to 14 Kg/$cm^2$G, i.e., steam at a considerably high temperature. In the new apparatus, the heat required for the gelation is shared by both of the blowing steam and the heat plates at the optimum ratio so that a steam of a somewhat lower pressure, e.g., 3 to 6 Kg/$cm^2$G, is used suitably.

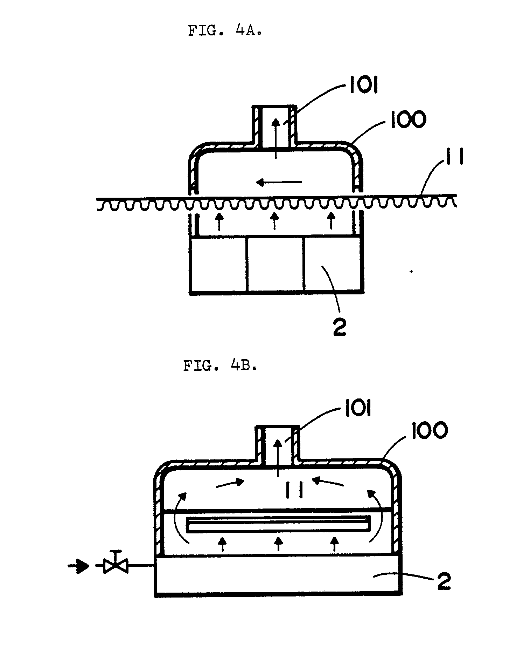

In order to make sure of the supply of sufficient heat for the gelation of the raw starch dispersion, it is advisable to use a heat preserving hood 100 as shown in Figure 4. The heat preserving hood is disposed to cover the region opposite to, i.e. facing the nozzles of, the steam blowing means across the half-lined corrugated paper 11 and has such a length that both ends of the hood extend beyond both edges of the half-lined corrugated paper as illustrated. The hood 100 is provided at its upper portion with an exhaust duct 101 to provide a draught out of the hood.

By the use of this hood, the steam is distributed as indicated by arrows so that any temperature difference, which may develop between the central portion and both edge portions of the half-lined corrugated paper is obviated to ensure a uniform heating and, hence, a uniform gelation of the raw starch dispersion.

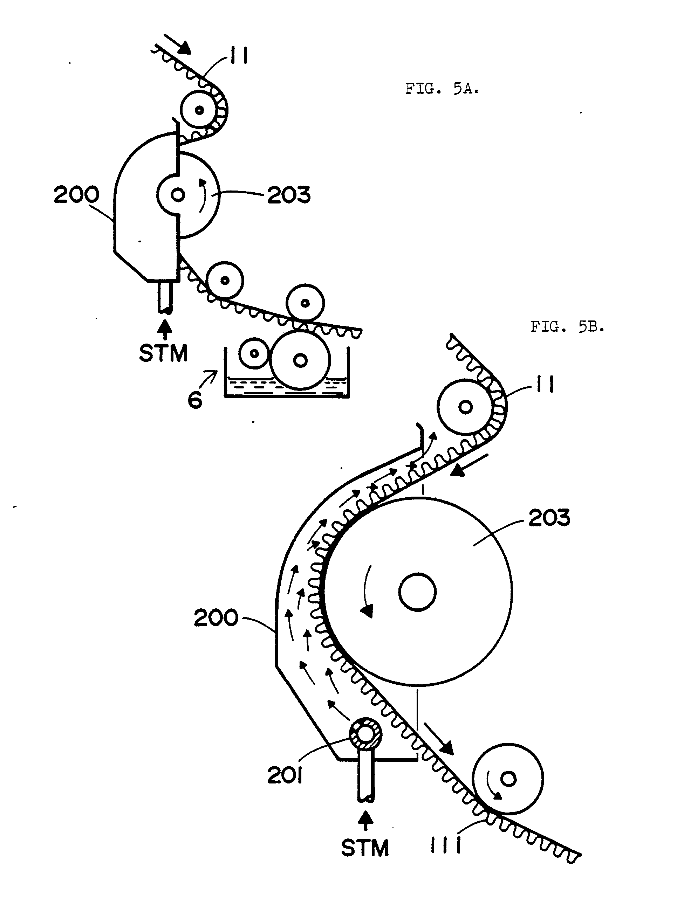

On the other hand, in the production of the corrugated cardboard employing, for example, reinforced core treated with resin, the corrugated sheet is less liable to absorb the moisture. Therefore, if the heating steam is applied immediately after the application of the raw starch dispersion, the bonding strength is lowered owing to insufficient impregnation of the starch occurred in the course of the half-gelation. In such a case, it is preferred to use a humidifying means as shown in Figure 5. This humidifying means is disposed at the upstream side of the means 6 for applying the raw starch dispersion, and is composed of a hood 200 covering the core, i.e., the corrugated core, of the half-lined corrugated paper 11 and one or, preferably, a plurality of nozzles 201 opening within the hood 200 and adapted to blow the steam against the core. The hood 200 preferably covers the region where a roll 203 is disposed, in order to preheat the half-lined corrugated paper.

In operation, the crests of the corrugated paper are suitably humidified and heated beforehand by the humidifying means, so that the applied raw starch dispersion impregnates promptly and the undesirable low bonding strength is avoided even if the steam is blown immediately after the application of the raw starch dispersion. The humidification can be made by a steam of a comparatively low pressure, e.g., 0.2 to 0.3 Kg/cm²G. Thus, the high pressure steam after the heating of the low pressure steam, as well as the steam after the heating of the heat plates, can suitably be used as the humidifying steam after a pressure reduction as required.

The apparatus can have various forms. For instance, the illustrated steam blowing means 5 can be substituted by various other structures which can perform the same function as the illustrated means 2. It is also advisable to provide a driving means incorporating a rack driven by an electric motor and a pinion so as to drive the steam blowing means 2 up and down as required. Such an arrangement offers an appreciable advantage in the maintenance through, for example, facilitating the cleaning of the pan for receiving the raw starch dispersion and the dispersion applying roller.

The addition or modification as explained above will be readily practiced by those skilled in the art.

The new apparatus brings about various advantages. First of all, it is to be noted that the apparatus provides a remarkable increase in the yield or production rate of the corrugated cardboard. As explained before, this is achieved by such an arrangement that the heat required for the gelation of the raw starch dispersion is shared by the low pressure steam blown to the raw starch dispersion and the heat plates at the optimum balance of heat input ratio therebetween. If the increase of the yield or production rate is not a matter of concern, the apparatus permits the production of corrugated cardboard with reduced energy consumption.

Another advantage brought about by the new apparatus resides in an improvement in the quality of the corrugated cardboard product. More specifically, the apparatus eliminates the undesirable warp and line cracking of the corrugated cardboard. In the conventional apparatus in which the heating of the raw starch dispersion is effected by the heat plates solely, a considerably large amount of heat is provided from the heat plates so that a large difference of heat input is developed between the heated side and non-heated side of the half-lined corrugated paper, and this may undesirably warp the product. In addition, since the heat plates have to be heated to a high temperature, e.g. 170°C, the liner is inevitably deteriorated by the heat as a result of contact with the heat plates. Consequently, the strength is lowered and causes line cracking in the product. On the other hand, the gelation of the raw starch dispersion solely by the blowing of the steam tends to cause a warp of the corrugated cardboard product owing to excessive moisture resulting from the use of too large an amount of heating steam. It is quite advantageous that all of these problems can be avoided by the use of the new apparatus.

From the foregoing description, it will be understood that the apparatus is useful and effective in the production of corrugated cardboard, particularly of the double-facer type.

**Claims**

1. An apparatus for producing corrugated cardboard, the apparatus comprising means (4, 5) for continuously supplying at least one half-lined corrugated paper (11) and a liner (12), means (6) for applying a suspension of raw starch in water to the crests of the corrugated paper, means (2) for blowing steam against the applied raw starch thereby to cause partial gelation of the raw starch, means (7) for forming the corrugated cardboard by pressing the at least one half-lined corrugated paper and the liner to bond them together, and means (8) for continuously taking up the thus formed corrugated cardboard; wherein the means for blowing steam includes a plurality of hollow bodies (21A, 21B...) extending across the moving direction of the half-lined corrugated paper, in use, adjacent to the half-lined corrugated paper, each hollow body having multiple nozzles (24) in its surface which faces, in use, the applied raw starch, the interior of each hollow body being divided by ducting for high pressure steam, into a first manifold (28) and a second manifold (29) which communicate with one another through steam passages (27), the second manifold accommodating a pipe (22) for supplying low pressure steam into the second manifold, the means for blowing steam further including an air blowing means (3); and wherein the means for forming the corrugated cardboard includes a heating plate (9) arranged, in use, to contact and heat the liner during pressing the at least one half-lined corrugated paper (11) and the liner; characterised in that the air blowing means is disposed at the upstream end of the steam blowing means as viewed in the moving direction of the half-lined corrugated paper and has a slit (31) which blows air, in use, towards the applied raw starch in a direction inclined towards the moving direction.

2. An apparatus according to claim 1, further comprising a heat-preserving hood (100) facing the nozzles (24) of the means for blowing steam against the half-lined corrugated paper and long enough to extend, in use, beyond both edges of the half-lined corrugated paper (11), the heat-preserving hood being provided with an exhaust duct (101) to provide a draught out of the hood.

3. An apparatus according to claim 1 or claim 2, further comprising a humidifying means (200) disposed upstream, as viewed in the moving direction of the half-lined corrugated paper, of the means (6) for applying the suspension of raw starch, the humidifying means including a hood covering the corrugated core of the half-lined corrugated paper and one or more nozzles (201) opening in the hood and arranged, in use, to blow steam against the core.

**Patentansprüche**

1. Apparat zur Herstellung von Wellenpappe, wobei der Apparat verfügt über Mittel (4, 5) zum kontinuierlichen Zuführen von mindestens einem halb-beschichteten Wellenpapier (11) und einer Beschichtung (12), über Mittel (6) zum Aufbringen einer Suspension von Rohstärke in Wasser auf die Kuppen des Wellenpapiers, über Mittel (2) zum Aufblasen von Dampf gegen die aufgebrachte Rohstärke, um dadurch eine teilweise Gelierung der Rohstärke zu bewirken, über Mittel (7) zum Bilden der Wellenpappe durch Pressen des mindestens einen halb-beschichteten Wellenpapiers und der Beschichtung, um diese miteinander zu verbinden, und über Mittel (8) zum kontinuierlichen Aufnehmen der so gebildeten Wellenpappe, wobei die Mittel zum Aufblasen des Dampfs über eine Vielzahl von Hohlkörpern (21A, 21B...) verfügen, die sich quer zur Bewegungsrichtung des halb-beschichteten Wellenpapiers, im Betrieb, in der Nähe des halb-beschichteten Wellenpapiers erstrecken, wobei jeder Hohlkörper Mehrfachdüsen (24) an seiner Oberfläche aufweist, die, im Betrieb, der aufgebrachten Rohstärke zugewandt ist, wobei das Innere jedes Hohlkörpers aufgeteilt ist durch Führung für Hochdruckdampf, in einen ersten Verteiler (28) und einem zweiten Verteiler (29), die über Dampfkanäle (27) miteinander in Verbindung stehen, wobei der zweite Verteiler eine Leitung (22) zum Zuführen von Niederdruckdampf in den ersten Verteiler beherbergt, die Mittel zum Blasen von Dampf des weiteren ein Luftblasmittel (3) umfassen und wobei die Mittel zum Formen der Wellenpappe eine Heizplatte (9) umfassen, die dazu dient, im Betrieb, die Beschichtung während des Pressens des mindestens einen halb-beschichteten Wellenpapiers (11) und der Beschichtung zu berühren und aufzuheizen, dadurch gekennzeichnet, daß das Luftblasmittel an dem stromaufwärtigen Ende der Dampfblasmittel gesehen in der Bewegungsrichtung des halb-beschichteten Wellenpapiers angeordnet ist und einen Schlitz (31) aufweist, der Luft, im Betrieb, in Richtung auf die aufgebrachte Rohstärke in einer Richtung geneigt zu der Bewegungsrichtung bläst.

2. Apparat nach Anspruch 1, der weiter über eine Wärmeerhaltungshaube (100) verfügt, die den Düsen (24) der Mittel zum Blasen von Dampf gegen das halb-beschichtete Wellenpapier zugewandt und die lang genug ist, um sich, im Betrieb, über beide Ränder des halb-beschichteten Wellenpapiers (11) zu erstrecken, wobei die Wärmeerhaltungshaube mit einer Auslaßleitung (101) ausgestattet ist, um einen Abzug der Haube zu bilden.

3. Vorrichtung nach Anspruch 1 oder Anspruch 2, die weiter verfügt über Anfeuchtungsmittel (200) angeordnet stromaufwärts, gesehen in der Bewegungsrichtung des halb-beschichteten Wellenpapiers, der Mittel (6) zum Aufbringen der Suspension der Rohstärke, wobei die Anfeuchtungsmittel eine Haube, die den Wellenkern des halb-beschichteten Wellenpapiers abdeckt, und eine oder mehrere Düsen (210) aufweisen, die in der Haube münden und dazu dienen, im Betrieb, den Dampf gegen den Kern zu blasen.

**Revendications**

1. Appareil de fabrication de carton ondulé, l'appareil comprenant un dispositif (4, 5) destiné à transmettre de façon continue au moins un carton ondulé simple face (11) et une couverture (12), un dispositif (6) d'application d'une suspension d'amidon brut dans de l'eau sur les crêtes du carton ondulé, un dispositif (2) de soufflage de vapeur d'eau sur l'amidon brut appliqué afin que celui-ci subisse une gélification partielle, un dispositif (7) destiné à former le carton ondulé final par compression du carton ondulé simple face au moins et de la couverture afin qu'ils soient liés, et un dispositif (8) destiné à prélever de façon continue le carton ondulé ainsi formé, dans lequel le dispositif de soufflage de vapeur d'eau comporte plusieurs corps creux (21A, 21B...) disposés transversalement à la direction de déplacement du carton ondulé simple face, à proximité de ce carton ondulé simple face lors du fonctionnement, chaque corps creux ayant plusieurs buses (24) à sa surface qui, pendant le fonctionnement, est tournée vers l'amidon brut appliqué, l'intérieur de chaque corps creux étant divisé par des conduits de circulation de vapeur d'eau à haute pression, en un premier collecteur (28) et un second collecteur (29) qui communiquent l'un avec l'autre par des passages (27) de vapeur d'eau, le second collecteur logeant une tuyauterie (22) destinée à transmettre de la vapeur à basse pression dans le second collecteur, le dispositif de soufflage de vapeur d'eau comprenant en outre un dispositif (3) de soufflage d'air, et dans lequel le dispositif destiné à former le carton ondulé comporte une plaque chauffante (9) disposée, pendant le fonctionnement, de manière qu'elle soit au contact de la couverture et la chauffe pendant la compression du carton ondulé simple face (11) au moins et de la couverture, caractérisé en ce que le dispositif de soufflage d'air est placé à l'extrémité amont du dispositif de soufflage de vapeur d'eau, dans la direction de déplacement du carton ondulé simple face, et a une fente (31) qui souffle de l'air vers l'amidon brut appliqué, lors du fonctionnement, en direction inclinée vers la direction de déplacement.

2. Appareil selon la revendication 1, comprenant en outre un capot (100) de conservation de chaleur disposé en face des buses (24) du dispositif de soufflage de vapeur d'eau sur le carton ondulé simple face, ayant une longueur suffisante pour que, pendant le fonctionnement, il dépasse des deux bords du carton ondulé simple face (11), le capot de conservation de chaleur ayant un conduit d'évacuation (101) destiné à créer une aspiration dans le capot.

3. Appareil selon l'une des revendications 1 et 2, comprenant en outre un dispositif humidificateur (200) disposé en amont, dans la direction de déplacement du carton ondulé simple face, du dispositif (6) d'application de la suspension d'amidon brut, le dispositif humidificateur comprenant un capot qui recouvre la cannelure du carton ondulé simple face et une ou plusieurs buses (201) débouchant dans le capot et disposées de manière que, pendant le fonctionnement, elles soufflent de la vapeur d'eau contre la cannelure.

FIG. 1.

FIG. 2A.

FIG. 2B.

FIG. 2C.

FIG. 3.

FIG. 4A.

FIG. 4B.

FIG. 5A.

FIG. 5B.